# EUROPEAN PATENT SPECIFICATION

(11) **EP 3 478 440 B1**
(45) Date of publication and mention of the grant of the patent: **05.01.2022**
(21) Application number: 17791468.6
(22) Date of filing: 04.08.2017
(51) Int. Cl.: B23K 9/20, B23K 9/00, F27D 1/16

(54) **METHOD FOR WELDING ANCHOR SUPPORTS FOR REFRACTORY LININGS**
VERFAHREN ZUM SCHWEISSEN VON ANKERTRÄGERN FÜR FEUERFESTE AUSKLEIDUNGEN
PROCÉDÉ POUR LE SOUDAGE DE SUPPORTS D'ANCRAGE POUR REVÊTEMENTS RÉFRACTAIRES

(30) Priority: 04.08.2016 IT 201600082431
(43) Date of publication of application: 08.05.2019
(73) Proprietor: Periotto, Bruno, 00147 Roma (IT)
(72) Inventor: Periotto, Bruno, 00147 Roma (IT)
(74) Representative: Cardelli, Guido
(86) International application number: PCT/IT2017/000164
(87) International publication number: WO 2018/025286

(56) References cited:
- JP-A- S60 247 478
- JP-A- 2003 247 702
- US-A- 2 473 871
- US-A- 2 950 379
- US-A- 3 312 315
- US-A- 3 993 887
- US-A- 6 034 345

## Description

### Technical Field

The present invention relates to a method for welding anchors supports for refractory linings, see e.g. JP S60 247478 A.

Industrial plants, where production processes are developed in presence of high temperatures, have a protective lining that protects and preserves their metal structure. This protective lining is generally made of refractory material, such as brick or concrete layers, possibly overlapping a layer of thermally insulating material. In both cases, the protective lining is adhered to the metal structure by means of anchors formed by suitably shaped metal bars, so called clamps, which at one end are welded to the metal structure of the industrial plant and, on the other end, are embedded in the refractory material of the protective lining, thus achieving an integral connection between the plant structure and the protective lining.

The protective lining has limited duration, being exposed to thermal, chemical and mechanical aggressions, whose effects are to reduce the thickness of the protective lining. In short, the protective lining over time is consumed and wears thin; therefore, its protection effect on the metal structure decreases.

### Background Art

In order to maintain an adequate level of protection of the metal structure, it is common practice, once interrupted the plant's production process, to demolish the residual refractory lining, that is the residual layer of refractory material, any underlying layer of thermally insulating material and, once removed the anchors, to proceed to the complete reconstruction of the protective lining. This is achieved by placing new anchor supports or clamps and new layers of thermally insulating material, where required, and of refractory material. In the process of rebuilding the protective lining, the anchor supports or clamps can be welded with a supply electrode or by arc welding with a ceramic ferrule (method also known as stud-welding), without supply material.

US-2,473,871 describes a stud-welding gun comprising a body carrying an anchor holder and being connected to a handle, a perforated support plate mounted on the body, a tubular extension that is slidably mounted with respect to the perforated support plate and holds up a ceramic ferrule with a nut ring. The stud-welding gun according to US-2,473,871 is not suitable for use in the reconstruction of a protective lining because its high bulk would require the removal of all the residual refractory lining.

US-2,950,379 also describes means and methods for stud-welding but it is not designed for welding refractory linings.

As is well known, the stud-welding consists in the welding of particular anchor supports that bear on the end to be welded a protrusion made of a tiny aluminum ball. Once installed the electrical ground connectors to the system structure, the anchor is positioned in contact with the sheet to which it is to be welded and, after the current is switched on, the anchor is removed so as to trigger an electric arc between the surface of the sheet and the small aluminum trigger, the electric arc being able to melt the two parts. The embedding of the anchor in the molten mass, upon termination of the current flow, allows a stable connection between the two parts to be carried out. The process takes place inside a disposable ceramic disk or ferrule that contains the molten mass, protects welding from the outside atmosphere and shields ultraviolet rays. All the process is timed and happens automatically. The parameters that are generally handled by the operator are the weld time and the necessary amount of current. Stud-welding has evolved into the RAW^{®} (Rapid Arc Welding) system of the company Silicon RAS BV^{®} (Wateringen, The Netherlands) where, in addition to the current and the weld time, other parameters such as speed and amount of lifting and embedding of the anchor can be handled. This system, which gives rapidity of execution, constancy and reliability to the welding, has been developed to allow the present invention described below.

Stud-welding is currently practiced on flat metal surfaces that were released from any residual refractory material and brought to the naked metal by grinding or sandblasting.

In the past, as an alternative to the complete elimination of the residual refractory material, and to the complete reconstruction of the protective lining, sometimes filling refractory material has been applied on the worn protective lining by means of concrete casting or by guniting, but this overlap is ineffective due to the unstable adhesion of the layer over the existing one, if left as such.

US-6,034,345 describes an apparatus for repairing containers for high temperature processes up to 1650 Celsius degrees while being at or near their operating temperatures. The apparatus includes a lance having a welder in its distal end, and a power and control wiring inside the lance. The welder is housed in a protective housing. Both the lance and the housing can be air or water cooled. In particular, US-6,034,345 shows the welder in contact with a side wall area to be repaired in a furnace. The furnace has a side wall with a steel shell, and pin anchors welded to the side wall according to the technique of stud-welding. After a determined period of use of the furnace, damaged refractory areas require repair. To avoid the complete shutdown of the furnace, which is operated at the extremely high temperatures mentioned above, the above apparatus is used. The apparatus secures the pin anchors on the side wall of the furnace lacking of refractory lining in order to apply a new layer. However, since the pin anchors are only applied on areas completely free of refractory lining, the distribution of the pin anchors is random and may be insufficient for the grip of the restored refractory lining. In addition, the co-operation between the residual refractory lining and the lining that is cast successively is poor, because the pin anchors that are fully embedded in the residual refractory lining cannot engage the restored refractory lining. JP S60 247478 A discloses a method for welding anchor supports for refractory linings of a metal structure of an industrial plant which comprises arc welding an anchor or clamp for refractory concretes on the metal structure of the industrial plant, cleaning the surface of the metal structure and overlapping new refractory concrete in order to restore the protective lining for the metal structure of the industrial plant.

### Description of the invention

An object of the invention is to restore an adequate and uniform protective lining on a metal structure without the need of removing the residual refractory lining.

In a first aspect thereof, the invention provides a method for welding anchor supports for refractory linings of a metal structure of an industrial plant, comprising the following steps:
- making a plurality of holes in a residual refractory lining, which covers the metal structure by means of a core drill machine until the metal structure is uncovered, the holes having a diameter larger than that of a ceramic ferrule for arc welding;
- cleaning the surface of the metal structure at the bottom of the holes from sludge and oxidation by means of a cleaner in order to obtain electrical continuity;
- arc welding with ceramic ferrule an anchor or clamp for refractory concretes on the metal structure of the industrial plant through each hole made in the residual refractory lining so that the anchor protrudes from the residual refractory lining; and
- overlapping new refractory concrete in order to restore the protective lining for the metal structure of the industrial plant.

A device for welding anchor supports for refractory linings of a metal structure of an industrial plant is provided, consisting of a welding gun for arc stud-welding, comprising a body that holds a chuck member for an anchor or clamp and is connected to a handle, a perforated support plate mounted on the body by means of stems, a tubular extension mounted on the perforated support plate and supporting a ceramic ferrule by a nut ring, wherein the tubular extension and the nut ring have a diameter smaller than that of the ceramic ferrule.

The device allows to electrically weld on the structure of the plant new anchor supports by holes in the residual refractory lining, without having to proceed previously with the demolition of the latter. The so applied anchor supports can be rigidly bonded to a new refractory layer that is superimposed on the residual refractory lining left in situ.

Advantageously, with the method according to the invention, the residual refractory lining already in situ is preserved. In addition, the supply of new refractory material is limited to the amount needed to restore the required thickness. It is ensured that the filling refractory material adheres firmly to the structure of the plant by means of anchor supports welded on the structure itself by holes made in the residual refractory layer, so that the interference with it is minimized.

The anchor supports welded on the structure of the plant in the manner described above are of such length as to project from the residual refractory layer to the extent necessary to ensure the integral and permanent bond of the filling refractory material which is superimposed on the existing one. The arrangement and the pitch with which the clamps are applied depend on the type and thickness of the filling material.

The resulting advantages are the following: eliminating the demolition and disposal step of the residual refractory material, limiting the reconstruction of only the amount of refractory material needed to restore the thickness required, and speeding up the maintenance process. Significant savings can therefore be achieved in terms of the amount of refractory concrete used and manpower necessary for the maintenance; but, above all, the greatest advantage is a drastic reduction of the plant stop. Not negligible are also the environmental benefits resulting from the elimination of the demolition and disposal of the residual refractory lining.

### Brief description of the drawings

Figures 1 and 2 are a top plan view and a side view, respectively, of an exemplary device not forming part of the invention;
Figure 3 is an overall front perspective view of the device in Figures 1 and 2;
Figure 4 is a partially cross-sectioned front detail of the perspective view in Figure 3;
Figures 5a, 5b, 5c, 5d, 5e, 5f are partially cross-sectioned side views of subsequent steps of the method according to the present invention, and
Figure 6 is a partial perspective view of an operator handling a structure by practicing the method according to the present invention.

### Description of embodiments of the invention

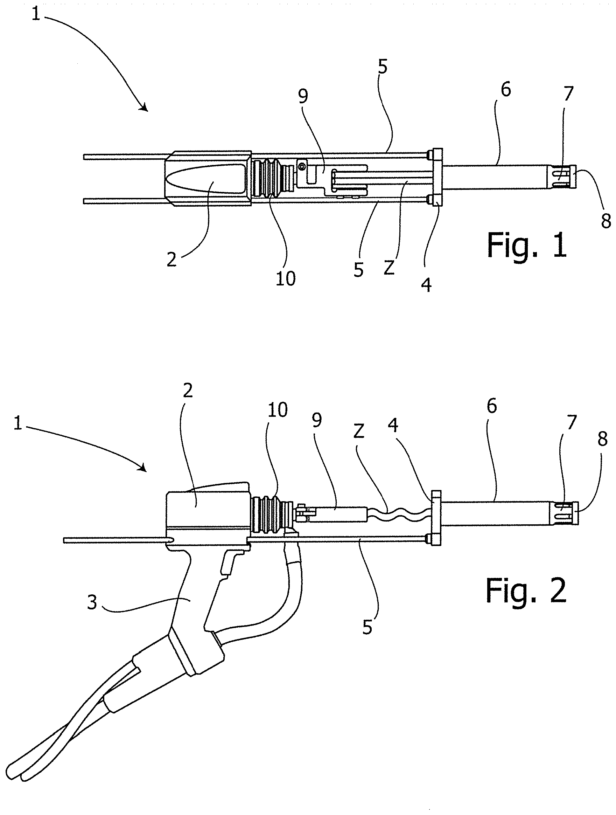

Initially reference is made to Figures 1 to 4 which represent an exemplary device not forming part of the invention, respectively in top plan view, lateral view, overall perspective view, and an enlarged detail of the last one. The device is basically an arc welding gun of the so-called stud-welding type, generally indicated as 1. The gun has a body 2 connected to a handle 3. Conventionally, a perforated support plate 4 is mounted on the body 2 by means of stems 5. A tubular extension 6 is mounted on the perforated support plate 4 which, at its front end, supports a ceramic ferrule 8 of a known type by means of a nut ring 7. According to the invention both the tubular extension 6 and the nut ring 7 have a diameter smaller than that of the ceramic ferrule 8.

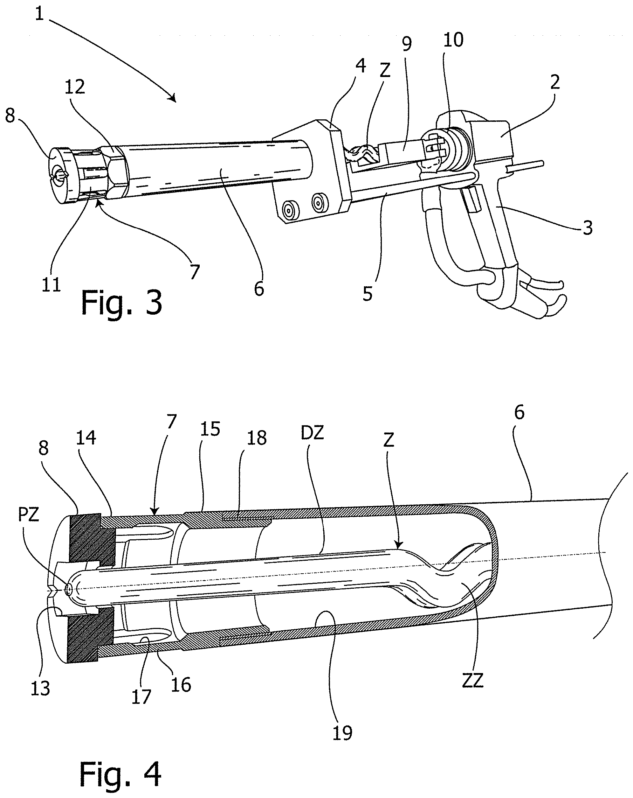

The nut ring 7 is provided with a front part 11 in contact with the ceramic ferrule 8 and a rear part 12 connected to the tubular extension 6. As best shown in Figure 4, the front part 11 of the nut ring 7 has a gripping portion 14 being positioned before elastic blades 16 that are spaced apart by gaps 17. The rear part 12 has a threaded coupling 18 for the connection with the tubular extension 6, and a nut-shaped faceted portion 15 in order to facilitate the screwing of the nut ring 7 to the tubular extension 6. Further, in Figure 4 it is shown that the tubular extension 6 has an inner cavity 19 surrounding an anchor or clamp Z. The inner cavity 19 is in communication with the hole of the perforated support plate 4 so that the clamp Z is surrounded by the perforated support plate 4, the tubular extension 6, the nut ring 7, and the ceramic ferrule 8.

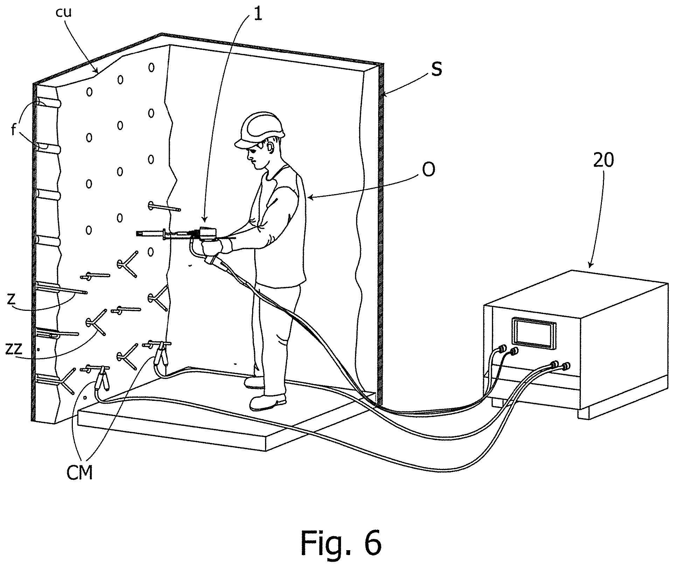

The clamp Z has, conventionally, a straight portion DZ ending at the front with a tiny protrusion PZ, and, in the rear, arms ZZ able to be divaricated. The clamp Z is held back by means of a chuck member 9 coupled with springs 10 to the body 2 of the welding gun 1. In the body 2 of the welding gun 1 there is contained a step-by-step motor (not shown) that moves longitudinally the clamp Z during the welding process. The step-by-step motor of the welding gun 1 is electronically operated by a control unit (not shown) located within the welder indicated as 20 in Figure 6, which is a partial perspective view of an operator handling a structure by practicing the method according to the present invention.

The clamp Z is held in position on the welding gun 1 by means of the chuck member 9 through which the current passes flowing through the clamp Z during welding.

In the ceramic ferrule 8, the melting and welding process is conventionally developed. The tubular extension 6 has a diameter smaller than that of the ceramic ferrule 8, which, as will be seen below, is the element that determines the minimum diameter of the hole to be made in the residual refractory lining. The ceramic ferrule 8 is left in situ after welding.

The tubular extension 6 and the nut ring 7 are preferably made of brass or aluminum in order to prevent that any molten steel particles projected during welding may adhere thereto. The clamp Z is retained on the mandrel 9 of the welding gun 1 so that the current passage from the gun 1 to the clamp Z is allowed.

As mentioned above, the clamp Z is contained in the hole of the support plate 4 and in the inner cavity 19 of the tubular extension 6, as well as in the nut ring 7 and the ceramic ferrule 8.

At its front end, the clamp Z has the tiny protrusion PZ constituted by an aluminum ball required to trigger the electric arc that blends the clamp Z and the welding surface within a space 13 (Figure 4) conformed in such a way as to contain the melted mass in which the clamp Z is caused to sink at the end of the current flow. All the movements imposed on the clamp Z in the welding process, the duration of the current passage, as well as the intensity thereof, are electronically handled automatically by the welding machine by means of the welding gun 1 in which conventionally the step-by-step motor, as mentioned above, or an electromagnet with antagonistic springs operates.

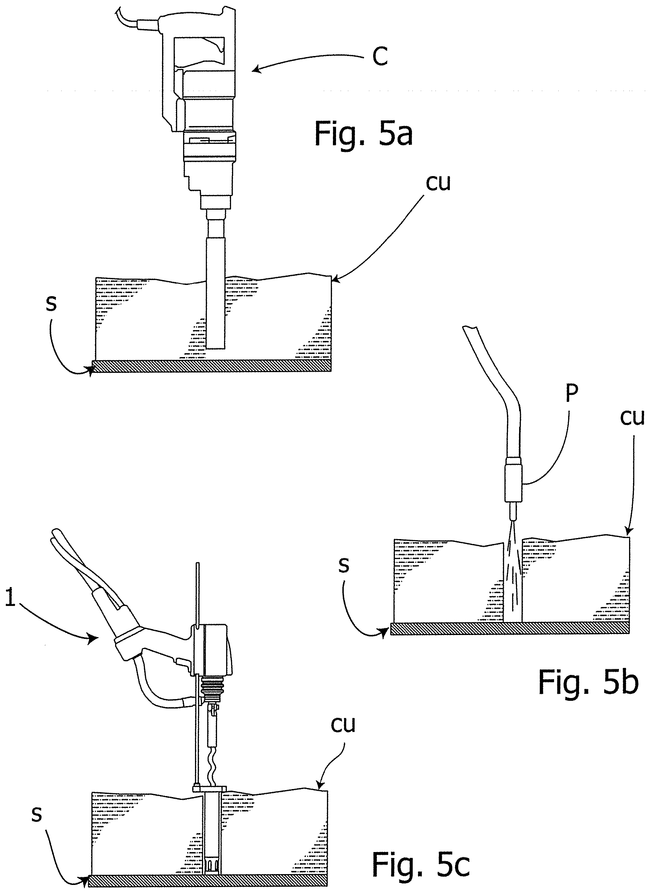

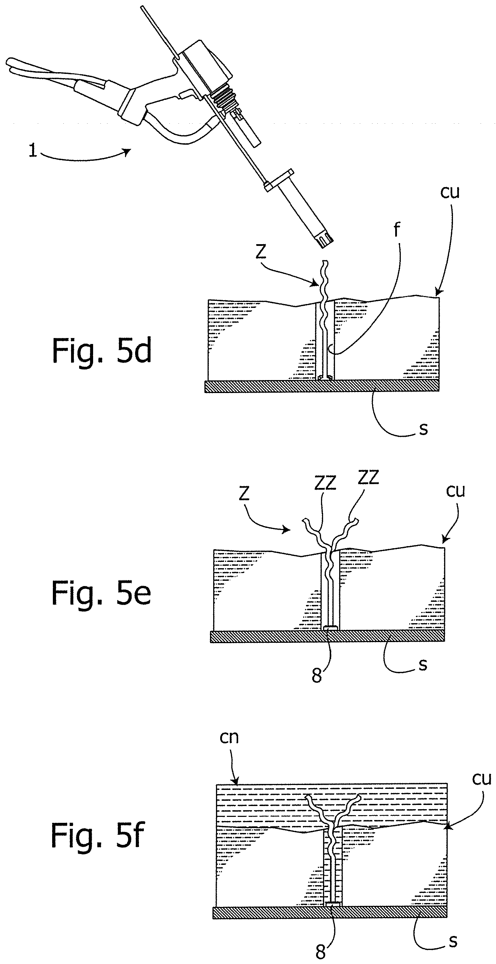

Reference is now made to Figures 5a, 5b, 5c, 5d, 5e, 5f, which are partially cross-sectioned side views of subsequent steps of the method according to the present invention. The operator O acts, by way of example, on a structure shown in Figure 6.

The metal structure s is coated with a protective lining that has worn over time: it is called residual refractory lining and is indicated as cu. According to the method of the present invention, a plurality of holes f is provided in the residual refractory lining as shown in Figure 6 by means of a diamond core drill machine C as shown in Figure 5a until the metal structure is uncovered.

The bottom of the hole f is visible in Figure 5b: therein the bottom surface is cleaned from sludge and oxidation by means of a cleaner P, in order to obtain the necessary electrical continuity. In the hole f, which has a diameter larger than that of the ceramic ferrule 8, the gun 1 for stud-welding according to the present invention is introduced. The tubular extension 6 and the respective nut ring 7 (figure 5c) can be introduced into the hole f, because, according to the present invention, both of them have a diameter smaller than that of the ceramic ferrule 8. The clamp Z or anchor for refractory concrete is arc welded with the ceramic ferrule 8 on the metal structure s of the plant through each hole f practiced in the residual refractory lining so that the clamp Z protrudes from the residual refractory lining. The gun 1, after welding the clamp Z, is then extracted (Figure 5d). As shown in Figure 6, the metal structure s is grounded with the electrical ground connections CM (Figure 6).

The end of the clamp Z protruding from the hole f is opened in the two arms ZZ able to be divaricated (Figure 5f) to promote the bond to the refractory concrete. Once all the clamps Z are inserted into the respective holes f made in the residual refractory lining cu, a new layer of refractory concrete cn may be superimposed to restore a protective lining suitable for protecting the metal structure s of the industrial plant. The overlap of the new refractory concrete cn is done by preparing a formwork and casting, or through guniting.

In detail, the use of the welding device in the method according to the present invention is as follows. The operator O inserts the tubular extension 6 of the welding gun 1, holding the ceramic ferrule 8 and containing the clamp or anchor Z, within the holes f made in the residual refractory lining until the ceramic ferrule 8 is in contact with the surface s of the plant. When the operator O operates the welding gun 1, the clamp Z, having at its end the protrusion PZ in the form of an aluminum ball, is placed in contact with the plant metal surface; then, the passage of current begins and, immediately, the anchor is removed so that the electric arc is triggered in order to implement the fusing process of the parts. The weld time of a single clamp is generally less than 0.8 s and the currents used can range from 300 to 1,600 A. The welding machine, for each welding performed, is able to return an indication of the actual values on the basis of the parameters set by the operator. The correspondence between the setting values and the welding values is evidence of a successful process. This type of verification is necessary because it is not possible to check the quality of welding at the bottom of the holes made in the refractory.

The method according to the invention allows to restore the thickness of a surface of residual refractory material by overlapping a new filling refractory material whose integral adhesion is ensured by means of anchor supports welded, with the above described arc method with ceramic ferrule, on the underlying structure of the plant, by holes made in the residual refractory lining. Residual refractory material can be indifferently made up of preformed bricks, and insulating or high-density concretes. The refractory concrete filled with this method in order to restore the required protective thickness can be cast in or dry or wet gunited.

The steps of the method according to the invention are summarized.

Holes are made in the remaining refractory lining, extended to its full thickness, through which the clamps will be later welded. In order to facilitate the insertion of the welding gun, the diameter of the holes exceeds by a few millimeters the diameter of the ceramic ferrules required for welding; they are preferably carried out by means of a diamond core drill machine which, without drumming, has minimal disturbance to the protective lining in situ. Further, the diamond core bits are able to cut the clamps that are already present, if any, in the residual refractory along the drilling path.

The metal surface exposed at the bottom of the hole is then cleaned from sludge and oxidation. The operation can be carried out by grinding or, in a faster and more effective way, by sandblasting, when approaching the blasting nozzle to the mouth of the hole. This operation serves to ensure the necessary electrical continuity between the anchorage to be welded and the surface of the plant that receives it.

The operator, once applied the electrical ground connections to the plant metal structure, welds the clamp to the surface in the hole bottom, by inserting in the hole the welding gun, until it contacts the metal surface. The welding gun holds inside the tubular extension the clamp to be welded and, at the end of the tubular extension, the ceramic ferrule to lose.

The operator then pulls the welding gun out of the hole leaving in situ the clamp welded on the surface in the hole bottom. The clamps may have different configurations: with one arm if the clamps are formed by a segment of round or flat bar; with two arms if the clamps are obtained by doubling the bar by bending. The clamps may also have a straight or protruding shape on the terminal part to promote the bond to the concrete. They can be made of stainless steel or carbon steel.

The operator spreads apart the clamp portions, if the clamp has two arms that project from the surface of the residual refractory lining in order to obtain a more effective embedding in the subsequent filling refractory concrete. It is a practice to paint the anchor supports with a tar-based varnish, as the tar disperses with the increasing of the temperature, in order to create between the anchor and the filling concrete a thin interstice able to compensate the difference in thermal expansion of the two materials.

The process concludes with the laying of a refractory concrete layer overlaid to the residual refractory lining, securely bound to the plant structure by means of the clamps welded in the holes made through the residual refractory lining. The thickness of the filling refractory concrete is adequate to the functional requirements of the plant; it can be applied either by casting, with a formwork system, or by guniting using a wet or dry process. In both cases, it should be paid attention to the filling of the holes in the underlying residual refractory in order to weld the anchor supports. The filling can be achieved by vibrating concrete mass in casting, or by an accurate projection into the holes when guniting.

Figure 6 shows a typical application within an industrial plant: the operator O welds the anchors Z on the structure s of the plant after applying the electrical ground connections through the holes f made in the residual refractory lining cu, by the welding gun 1 according to the invention. The welding gun 1 and the electrical ground connections CM are powered by a welding machine 20 that manages electronically the electrical and geometric values of the welding: the return of these values enables the quality control of the welding process.

### Industrial use

The method described can be applied to all plants where production processes require the development of high temperatures and which, therefore, need to be protected by means of refractory quality materials. As an example, there are cited metallurgical, petrochemical and cement and glass production plants, waste-to-energy plants, thermoelectric power plants, and so on.

## Claims

1. A method for welding anchor supports for refractory linings of a metal structure of an industrial plant, **characterized by** the following steps:
- making a plurality of holes (f) in a residual refractory lining (cu), which covers the metal structure (s) by means of a core drill machine (C) until the metal structure (s) is uncovered, each hole (f) having a diameter larger than that of a ceramic ferrule (8) for stud-welding;
- cleaning the surface of the metal structure (s) at the bottom of the holes (f) from sludge and oxidation by means of a cleaner (P) in order to obtain electrical continuity;
- arc welding with ceramic ferrule (8) an anchor or clamp (Z) for refractory concretes on the metal structure (s) of the industrial plant through each hole (f) made in the residual refractory lining (cu) so that the anchor protrudes from the residual refractory lining (cu); and
- overlapping new refractory concrete (cn) in order to restore the protective lining for the metal structure (s) of the industrial plant.

2. The method according to claim 1, wherein the overlapping of the new refractory concrete (cn) is carried out according to a technique chosen inside the group comprising the preparation of formwork and casting, or the guniting, the new refractory concrete adhering to the structure (s) of the industrial plant by means of anchor supports or clamps (Z) welded through the plurality of holes (f).

## Patentansprüche

1. Verfahren zum Schweißen von Ankerträgern für feuerfeste Auskleidungen einer Metallkonstruktion einer Industrieanlage, **gekennzeichnet durch** die folgenden Schritte:
- Herstellen einer Vielzahl von Löchern (f) in einer feuerfesten Restauskleidung (cu), die die Metallkonstruktion (s) abdeckt, mittels einer Kernbohrmaschine (C), bis die Metallkonstruktion (s) unbedeckt ist, wobei ein jedes Loch (f) einen Durchmesser aufweist, der größer ist als der einer keramischen Hülse (8) für das Bolzenschweißen;
- Reinigen der Oberfläche der Metallkonstruktion (s) am Boden der Löcher (f) von Schlick und Oxidation mittels eines Reinigers (P), um elektrische Kontinuität zu erhalten;
- Bogenschweißen mit keramischer Hülse (8) eines Ankers oder einer Klammer (Z) für feuerfesten Beton an der Metallkonstruktion (s) der Industrieanlage durch ein jedes Loch (f), das in der feuerfesten Restauskleidung (cu) ausgebildet ist, sodass der Anker aus der feuerfesten Restauskleidung (cu) hervorsteht, und
- Überlappen von neuem feuerfestem Beton (cn), um die Schutzauskleidung für die Metallkonstruktion (s) der Industrieanlage wiederherzustellen.

2. Verfahren nach Anspruch 1, wobei das Überlappen des neuen feuerfesten Betons (cn) nach einer Technik durchgeführt wird, die aus der Gruppe ausgewählt wird, umfassend die Vorbereitung von Rahmenwerk und das Abformen oder Torkretieren des neuen feuerfesten Betons, anhaftend an die Konstruktion (s) der Industrieanlage, mittels Ankerstützen oder Klammern (Z), die durch die Vielzahl von Löchern (f) angeschweißt sind.

## Revendications

1. Procédé pour le soudage de supports d'ancrage pour revêtements réfractaires d'une structure métallique d'une installation industrielle, **caractérisé par** les étapes suivantes :
- réaliser une pluralité de trous (f) dans un revêtement réfractaire résiduel (cu), qui recouvre la structure métallique (s) au moyen d'une machine de carottage (C) jusqu'à ce que la structure métallique (s) soit découverte, chaque trou (f) ayant un diamètre supérieur à celui d'une virole en céramique (8) pour le soudage de goujons ;
- éliminer de la surface de la structure métallique (s) au niveau du fond des trous (f) les boues et l'oxydation au moyen d'un nettoyeur (P) afin d'obtenir une continuité électrique ;
- souder à l'arc avec une virole en céramique (8) une ancre ou une pince (Z) pour bétons réfractaires sur la structure métallique (s) de l'installation industrielle à travers chaque trou (f) réalisé dans le revêtement réfractaire résiduel (cu) de sorte que l'ancre fasse saillie du revêtement réfractaire résiduel (cu) ; et
- recouvrir avec du nouveau béton réfractaire (cn) afin de rétablir le revêtement de protection de la structure métallique (s) de l'installation industrielle.

2. Procédé selon la revendication 1, dans lequel le recouvrement du nouveau béton réfractaire (cn) est effectué selon une technique choisie dans le groupe comprenant la préparation du coffrage et le coulage, ou l'application par projection, le nouveau béton réfractaire adhérant à la structure (s) de l'installation industrielle au moyen de supports d'ancrage ou de pinces (Z) soudés à travers la pluralité de trous (f).
